(19) Europäisches Patentamt
European Patent Office
Office européen des brevets

(11) EP 4 067 432 B1

(12) **EUROPEAN PATENT SPECIFICATION**

(45) Date of publication and mention of the grant of the patent:
**15.11.2023 Bulletin 2023/46**

(21) Application number: **21166741.5**

(22) Date of filing: **01.04.2021**

(51) International Patent Classification (IPC):
***C08L 23/12*** *(2006.01)* ***C08F 4/659*** *(2006.01)*
***C08F 210/06*** *(2006.01)*

(52) Cooperative Patent Classification (CPC):
(C-Sets available)
**C08L 23/12; C08F 210/06;** C08F 4/65912; C08F 4/65916; C08F 2420/07; C08L 2203/162; C08L 2207/02; C08L 2314/06 (Cont.)

# (54) POLYMER COMPOSITION SUITABLE FOR MAKING FILMS

ZUR HERSTELLUNG VON FOLIEN GEEIGNETE POLYMERZUSAMMENSETZUNG

COMPOSITION POLYMÈRE ADAPTÉE À LA FABRICATION DE FILMS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2022 Bulletin 2022/40**

(73) Proprietor: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**
- **FRIEDRICH, Karlheinz**
  **2320 Schwechat-Mannswörth (AT)**
- **NUMMILA-PAKARINEN, Auli**
  **06101 Porvoo (FI)**

(74) Representative: **Ter Meer Steinmeister & Partner Patentanwälte mbB**
**Nymphenburger Straße 4**
**80335 München (DE)**

(56) References cited:
**EP-A1- 2 743 293**
**EP-A1- 3 365 388**
**US-A1- 2020 369 861**
**US-B2- 8 895 685**

EP 4 067 432 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/6492;**
**C08F 210/06, C08F 4/65927;**
**C08L 23/12, C08L 23/14, C08L 23/12;**
**C08L 23/12, C08L 23/14, C08L 23/26;**
**C08L 23/12, C08L 23/16, C08L 23/12;**
**C08L 23/12, C08L 23/16, C08L 23/26;**
C08F 210/06, C08F 210/16, C08F 2500/12, C08F 2500/26, C08F 2500/27, C08F 2500/32, C08F 2500/34, C08F 2500/35

## Description

The present invention relates to a polymer composition comprising a specific $C_2C_3$ heterophasic copolymer and a specific propylene homopolymer and to films and coated articles comprising a layer comprising said polymer composition.

Polypropylene compositions suitable for coating, especially for extrusion coating are already known in the art.

US 3,418,396 A relates to a polyolefin composition for extrusion, coating and molding various articles, comprising a predominant portion of a mixture from about 40 % to 99 % by weight of a polypropylene having a flow rate of from about 12 dg/min to 120 dg/min and about 1 % to 60 % of a polyethylene having a melt index of from about 1 dg/min to 15 dg/min, a density greater than about 0.912 g/cc and a melt index recovery of greater than 50 %.

US 4,378,451 A refers to blends containing degraded crystalline polypropylene or propylene containing copolymers useful as extrusion coating compositions. These coated substrates then can be used in fabricating bags and other packaging applications. Particularly, these coatings are a blend of a degraded crystalline polypropylene, or propylene containing copolymer, and low density polyethylene.

EP 1 638 695 A1 relates to an extrusion coated substrate having a coating comprising a polyethylene produced by polymerization catalysed by a single site catalyst and comprising as comonomers ethylene and at least two C4-12 alpha olefins

US 2014/031462 A1 refers to a process of extruding a blend of an irradiated first propylene polymer and a non-irradiated second propylene polymer, where the first propylene polymer comprises a non-phenolic stabilizer. The irradiation of the first propylene polymer extrudate is conducted in a reduced oxygen environment, and the irradiated first propylene polymer and the non-irradiated second propylene polymer are blended at a temperature below their respective melting points. The blend has a viscosity retention of 20 to 35 %.

EP2 492 293 A1 relates to a polypropylene composition suitable for extrusion coating or extrusion foaming for a broad variety of substrates having high melt strength and drawability, excellent processability, low gel content, and being capable of withstanding high temperatures, a process for the provision of such polypropylene compositions and extrusion coated or extrusion foamed articles. The polypropylene composition comprises a polypropylene base resin whereby the polypropylene base resin has a $MFR_2$ (2.16 kg, 230°C, ISO 1133) of 5 to 35 g/10min and an optical gel index of 1000 or less, measured with an OCS gel counting apparatus on thin cast films with a film thickness of 70 $\mu$m which were produced with a chill roll temperature of 40°C, whereby the polypropylene base resin has a strain hardening factor (SHF) of 2.3 to 7.0 when measured at a strain rate of 3.0 s -1 and a Hencky strain of 2.5. The process for the production of such a polypropylene composition is characterized in that a single site catalyst derived polypropylene intermediate base resin having a $MFR_2$ (2.16 kg, 230°C, ISO 1133) of 6.0 g/10min or lower is mixed with a peroxide masterbatch composition and an oligomeric diene masterbatch composition to form a pre-mixed material; and the pre-mixed material is melt mixed in a melt mixing device at a barrel temperature in the range of 180 to 300°C.

EP 2 877 535 A1 refers to a process for providing a polypropylene composition comprising a branched polypropylene in which a polypropylene with a melt flow rate $MFR_2$ (230°C) of more than 1.0 g/10min is reacted with a thermally decomposing free radical-forming agent and optionally with a bifunctionally unsaturated monomer obtaining thereby the branched polypropylene,wherein the polypropylene composition has a F30 melt strength of more than 5.8 cN and a v30 melt extensibility of more than 200 mm/s.

For film and coating applications a high melt strength and for many applications additionally an excellent balance of sealing properties and optical properties is needed. Furthermore, for food applications a low content of materials being extractable in hexane is a requirement. The compositions known from the prior art do not offer these combination of properties and/or have a high content of hexane extractables. In general, compositions giving low haze and low Sealing Initiation Temperature (SIT) are preferred.

Therefore, it was one objective of the present invention to provide a polymer composition having a high melt strength and showing an excellent combination of sealing properties, especially a low SIT and optical properties, especially a low haze. Furthermore it was the objective of the present invention to provide composition allowing to produce films and coated articles having a low content of hexane extractables.

These objects have been solved by the polymer composition according to claim 1 comprising at least the following components:

A) 30.0 to 80.0 wt.-% based on the overall weight of the polymer composition of a single-site catalyst produced $C_2C_3$ heterophasic copolymer (HECO); whereby said copolymer has

- a melting point in the range of 150 to 162°C determined by differential scanning calorimetry according to ISO 11357-3;
- a $MFR_2$ (230°C, 2.16 kg) determined according to ISO 1133 in the range of 5.0 to 40.0 g/10 min; and

- a total C2-content in the range of 1 to 10 wt.-% based on the overall weight of component (A); and
- a soluble fraction (SF) based on the total weigh of component (A) in the range of 10 to 50 wt.-% determined according to CRYSTEX QC, Polymer Char as described in the description;

B) 20.0 to 70.0 wt.-% based on the overall weight of the polymer composition of a propylene homopolymer; whereby said propylene homopolymer has

- a $MFR_2$ (190°C, 2.16 kg) determined according to ISO 1133 in the range of 1.0 to 20.0 g/10 min; and
- a $F_{30}$ melt strength determined according to ISO 16790 of at least 10 cN;

with the proviso that the weight proportions of components A) and B) add up to 100 wt.-%.

Advantageous embodiments of the polymer composition in accordance with the present invention are specified in the dependent claims 2 to 7. Claim 8 of the present invention relates to film comprising at least one layer comprising the polymer composition according to the invention and claims 8 to 11 relate to preferred embodiments of said film. Claims 12 to 13 relate to a coated article comprising at least a layer comprising said polymer composition, claim 14 relates to a process for producing said article and claim 15 refers to the use of the coating for specific end applications.

## Definitions

Indications of Quantity

The polymer composition in accordance with the present invention mandatorily comprises the components (A) and (B) and optionally additives (C). The requirement applies here that the components (A) and (B) and if present the additives (C) add up to 100 wt.-% in sum. The fixed ranges of the indications of quantity for the individual components (A) and (B) and optionally the additives (C) are to be understood such that an arbitrary quantity for each of the individual components can be selected within the specified ranges provided that the strict provision is satisfied that the sum of all the components (A), (B) and optionally the additives (C) add up to 100 wt.-%.

Regio defects

The region defects of propylene polymers can be of three different types, namely 2,1-erythro (2,le), 2,1-threo (2,lt) and 3,1 defects. A detailed description of the structure and mechanism of formation of regio defects in polypropylene can be found in Chemical Reviews 2000, 100(4), pages 1316 to 1327. These defects are measured using $^{13}C$ NMR as described in more detail below.

The term "2,1 regio defects" as used in the present invention defines the sum of 2,1-erythro regio-defects and 2,1-threo regio defects. Propylene random copolymers or polypropylene homopolymers having a number of regio defects as required in the propylene composition of the invention are usually and preferably prepared in the presence of a single-site catalyst.

The catalyst influences in particular the microstructure of the polymer. Accordingly, polypropylenes prepared by using a singe-site metallocene catalyst provide a different microstructure compared to those prepared by using Ziegler-Natta (ZN) catalysts. The most significant difference is the presence of regio-defects in metallocene-made polypropylenes which is not the case for polypropylenes made by Ziegler-Natta (ZN) catalysts.

A "single-site catalyst produced" polymer is a polymer which has been produced in the presence of a single-site catalyst.

Where the term "comprising" is used in the present description and claims, it does not exclude other non-specified elements of major or minor functional importance. For the purposes of the present invention, the term "consisting of' is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Component (A)

The polymer composition in accordance with the present invention comprises as component (A) from 30.0 to 80.0 wt.-% based on the overall weight of the polymer composition of a single-site catalyst produced $C_2C_3$ heterophasic copolymer (HECO); whereby said copolymer has a melting point in the range of 150 to 162°C determined by differential scanning calorimetry according to ISO 11357-3; a $MFR_2$ (230°C, 2.16 kg) determined according to ISO 1133 in the range of 5.0 to 40.0 g/10 min; a total C2-content in the range of 1 to 10 wt.-% based on the overall weight of component (A); and a soluble fraction (SF) based on the total weigh of component (A) in the range of 10 to 50 wt.-% determined according to CRYSTEX QC, Polymer Char as described in the experimental section.

Preferred embodiments of component (A) will be discussed in the following.

A preferred embodiment of the present invention stipulates that component (A) has a melting point determined by differential scanning calorimetry according to ISO 11357-3 in the range of 151 to 160°C, preferably in the range of 151 to 155°C and more preferably in the range of 151 to 154°C.

According to another preferred embodiment in accordance with the present invention component (A) has a $MFR_2$ (230°C, 2.16 kg) determined according to ISO 1133 in the range of 10.0 to 30.0 g/10 min, preferably in the range of 15.0 to 25.0 g/10 min and more preferably in the range of 20.0 to 23.0 g/10 min.

Still a further preferred embodiment according to the present invention stipulates that component (A) has a total C2-content in the range of 1.0 to 8.0 wt.-%, preferably in the range of 1.5 to 6 wt.-% and more preferably in the range of 2.5 to 4.0 wt.-% based on the overall weight of component (A).

In another preferred embodiment of the present invention component (A) has a soluble fraction (SF) based on the total weight of component (A) in the range of 15 to 40 wt.-%, preferably in the range of 20 to 30 wt.-% and more preferably in the range of 24 to 28 wt.-% determined according to CRYSTEX QC, Polymer Char as described in the experimental section.

According to a further embodiment in accordance with the present invention component (A) has a C2-content of the soluble fraction (SF) based on the total weight of the soluble fraction in the range of 5 to 40 wt.-%, preferably in the range of 8 to 30 wt.-%, more preferably in the range 8 to 25 wt.-% and even more preferably in the range of 9 to 12 wt.-% determined according to CRYSTEX QC, Polymer Char as described in the experimental section.

Still another preferred embodiment in accordance with the present invention stipulates that component (A) has a C2-content of the crystalline fraction (CF) based on the total weight of the crystalline fraction which is below 4 wt.-%, preferably below 2 wt.-%, more preferably in the range of 0 to 1 wt.-% and even more preferably is 0 wt.-% determined according to CRYSTEX QC, Polymer Char as described in the experimental section.

According to another preferred embodiment according to the present invention component (A) has an intrinsic viscosity (IV) of the soluble fraction (SF) which is in the range of 1.0 to 5.0 dl/g, preferably in the range of 2.0 to 4.0 dl/g, more preferably in the range of 2.2 to 3.4 dl/g and even more preferably in the range of 3.0 to 3.3 dl/g determined according to CRYSTEX QC, Polymer Char as described in the experimental section.

Still a further preferred embodiment in accordance with the present invention stipulates that component (A) has an intrinsic viscosity (IV) of the crystalline fraction (CF) which is in the range of 0.5 to 4.0 dl/g, preferably in the range of 0.8 to 2.0 dl/g and more preferably in the range of 1.0 to 1.2 dl/g determined according to CRYSTEX QC, Polymer Char as described in the experimental section.

According to another preferred embodiment in accordance with the present invention component (A) has a Tg1 determined by dynamic mechanical analysis (DMA) according to ISO 6721-7 in the range of -10 to 10°C, preferably in the range of -5 to 5°C and more preferably in the range of -2 to 2°C.

According to another preferred embodiment according to the present invention component (A) has a Tg2 determined by dynamic mechanical analysis (DMA) according to ISO 6721-7 in the range of -70 to -10°C, preferably in the range of -45 to -20°C and more preferably in the range of -26 to -22°C.

Still a further preferred embodiment in accordance with the present invention stipulates that component (A) has a storage modulus G' determined by dynamic mechanical analysis (DMA) according to ISO 6721-7 in the range of 250 to 600 MPa, preferably in the range of 300 to 550 MPa and more preferably in the range of 420 to 470 MPa.

The glass transition temperature Tg and the storage modulus G'(23 °C) were determined by dynamic mechanical analysis (DMA) according to ISO 6721-7.

In another preferred embodiment according to the present invention component (A) has been produced in the presence of a single-site catalyst of a metallocene catalyst.

A preferred metallocene catalyst has Formula (I) as shown below.

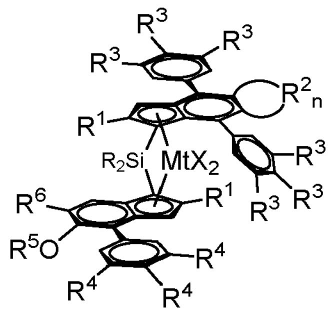

(I)

wherein

Mt is Hf or Zr;
each X is a sigma-ligand,
each $R^1$ independently are the same or can be different and are a $CH_2$-$R^7$ group, with $R^7$ being H or linear or branched $C_{1}$-$_{6}$-alkyl group, $C_{3-8}$ cycloalkyl group, $C_{6-10}$ aryl group,
each $R^2$ is independently a -CH=, -CY=, -$CH_2$-, -CHY- or -$CY_2$- group, wherein Y is a $C_{1}$-$_{10}$ hydrocarbyl group and where n is 2-6,
each $R^3$ and $R^4$ are independently the same or can be different and are hydrogen, a linear or branched $C_1$-$C_6$-alkyl group, an OY group or a $C_7$-$_{20}$ arylalkyl, $C_7$-$_{20}$ alkylaryl group or $C_6$-$_{20}$ aryl group, whereby at least one $R^3$ per phenyl group and at least one $R^4$ is not hydrogen, and optionally two adjacent $R^3$ or $R^4$ groups can be part of a ring including the phenyl carbons to which they are bonded,
$R^5$ is a linear or branched $C_1$-$C_6$-alkyl group, $C_7$-$_{20}$ arylalkyl, $C_7$-$_{20}$ alkylaryl group or $C_6$-$C_{20}$-aryl group,
$R^6$ is a $C(R^8)_3$ group, with $R^8$ being a linear or branched $C_1$-$C_6$ alkyl group,
each R is independently a $C_1$-$C_{20}$-hydrocarbyl, $C_6$-$C_{20}$-aryl, $C_7$-$C_{20}$-arylalkyl or $C_7$-$C_{20}$-alkylaryl.

According to another preferred embodiment the metallocene catalyst has formula (II) as shown below.

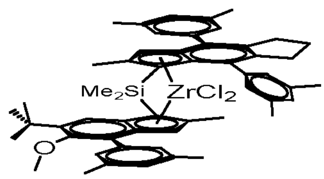

(II)

Preferably component (A) is prepared in a sequential polymerization process comprising at least two polymerization reactors (R1) and (R2), whereby in the first polymerization reactor (R1) a first polymer fraction a1) is produced, which is subsequently transferred into the second polymerization reactor (R2). In the second polymerization reactor (R2), a second polymer fraction a2) is then produced in the presence of the first polymer fraction a1).

Polymerization processes which are suitable for producing component (A) generally comprise at least two polymerization stages and each stage can be carried out in solution, slurry, fluidized bed, bulk or gas phase.

A preferred multistage process for manufacturing component (A) is a "loop-gas phase"-process, such as developed by Borealis (known as BORSTAR® technology) which is described e.g. in patent literature, such as in EP 0 887 379 A1, WO 92/12182 A1, WO 2004/000899 A1, WO 2004/111095 A1, WO 99/24478 A1, WO 99/24479 A1 or in WO 00/68315 A1. A further suitable slurry-gas phase process is the Spheripol®process of Basell.

Component (B)

The polymer composition in accordance with the present invention comprises as component (B) from 20.0 to 70.0 wt.-% based on the overall weight of the polymer composition of a propylene homopolymer; whereby said propylene homopolymer has a $MFR_2$ (190°C, 2.16 kg) determined according to ISO 1133 in the range of 1.0 to 20.0 g/10 min; and a $F_{30}$ determined according to ISO 16790 of at least 10 cN.

Preferred embodiments of component (B) will be discussed in the following.

According to one preferred embodiment in accordance with the present invention component (B) has a $MFR_2$ (230°C, 2.16 kg) determined according to ISO 1133 in the range of 1.0 to 15.0 g/10 min, preferably in the range of 3.0 to 15.0 g/10 min, more preferably in the range of 6.0 to 14.0 g/10 min and even more preferably in the range of 8.0 to

12.0 g/10 min.

Still another preferred embodiment in accordance with the present invention stipulates that component (B) has a $F_{30}$ determined according to ISO 16790 of at least 20 cN, preferably of at least 30 cN and more preferably in the range of 30 to 60 cN.

In a further preferred embodiment of the present invention component (B) has a $v_{30}$ melt extensibility determined according to ISO 16790 of at least 200 mm/s, preferably of at least 250 mm/s and more preferably in the range of 250 to 300 mm/s.

Still a further preferred embodiment in accordance with the present invention stipulates that component (B) has a density determined according to ISO1183 in the range of 895 to 920 kg/m$^3$, preferably in the range of 900 to 910 kg/m$^3$ and more preferably in the range of 904 to 906 kg/m$^3$.

Polymer composition

According to one preferred embodiment in accordance with the present invention the polymer composition has a $MFR_2$ (230°C, 2.16 kg) determined according to ISO 1133 in the range of 4.0 to 30.0 g/10 min, preferably in the range of 8.0 to 20.0 g/10 min and more preferably in the range of 12.0 to 16.0 g/10 min.

Another preferred embodiment stipulates that the polymer composition has a F30 determined according to ISO 16790 of at least 2 cN, preferably of at least 3 cN and more preferably in the range of 3 to 5 cN.

Still a further preferred embodiment in accordance with the present invention stipulates that the polymer composition has a $v_{30}$ melt extensibility determined according to ISO 16790 of at least 200 mm/s, preferably of at least 230 mm/s, more preferably in the range of 240 to 300 mm/s and still more preferably in the of 240 to 260 mm/s.

According to a further preferred embodiment according to the present invention the polymer composition has a $MFR_2$ (230°C, 2.16 kg) determined according to ISO 1133 in the range of 12.0 to 16.0 g/10 min and a $F_{30}$ determined according to ISO 16790 in the range of 3 to 5 cN.

A further embodiment in accordance with the present invention stipulate that the polymer composition has a xylene soluble (XCS) fraction determined in line with ISO 16152 in the range of 10 to 20 wt.-%, preferably in the range of 12 to 18 wt.-% and more preferably in the range of 14 to 16 wt.-%.

According to a further preferred embodiment according to the present invention the polymer composition has a flexural modulus determined according to ISO 178 in the range of 1000 to 1600 MPa, preferably in the range of 1100 to 1400 MPa and more preferably in the range of 1200 to 1300 MPa.

Still another preferred embodiment in accordance with the present invention stipulates that the polymer composition has an intrinsic viscosity of the XCS measured according to DIN ISO 1628/1 and /3 in the range of 2.5 to 3.6 dl/g, preferably in the range 2.7 to 3.3 dl/g and more preferably in the range of 3.05 to 3.15 dl/g.

According to a further preferred embodiment according to the present invention the polymer composition has a Charpy Notch Impact strength determined according to ISO 179 1eA at 23°C in the range of 4 to 20 kJ/m$^2$, preferably in the range of 4.5 to 8 kJ/m$^2$ and more preferably in the range of 5 to 6 kJ/m$^2$.

Still another preferred embodiment in accordance with the present invention stipulates that the polymer composition has a haze determined on a test specimen having a thickness of 1 mm as described in the experimental section in the range of 5 to below 60 %, preferably in the range of 40 to 55 % and more preferably in the range of 45 to 51 %.

According to a further preferred embodiment according to the present invention the polymer composition has a content of hexane hot solubles (C6 FDA, wt.-%) determined according to FDA section 177.1520 in below 2.1 wt.-%, preferably the range from 0.5 to 2.0 wt.-%, more preferably in the range of 0.5 to 1.8wt.-% and still more preferably in the range of 1.2 to 1.6 wt.-%.It is furthermore preferred that the ratio of C6 FDA / XCS is below 0.20 and more preferably below 0.10.

Another preferred embodiment of the present invention stipulates that the polymer composition comprises at least one additive C), preferably selected from the group consisting of slip agents, acid scavengers, UV-stabilisers, pigments, antioxidants, additive carriers, nucleating agents and mixtures thereof, whereby these additives preferably are present in 0.1 to 5.0 wt.-% and more preferably in 0.1 to 4.0 wt.-% based on the overall weight of the polymer composition.

Film

The present invention also relates to a film comprising the polymer composition in accordance with the present invention and according to one preferred embodiment said film consists of the polymer composition.

Still another preferred embodiment of the present invention stipulates that the film has a tensile modulus determined according to ISO 527-3 at 23°C on a cast film having a thickness of 50 μm in machine direction as well as in transverse direction in the range of 200 to 1000 MPa, preferably in the range of 300 to 700 MPa and more preferably in the range of 400 to 500 MPa.

According to another preferred embodiment of the present invention the film has a sealing initiation temperature determined as described in the experimental section on a cast film having a thickness of 50 μm in the range of 100°C to below 140°C, preferably in the range of 120°C to 135°C, more preferably in the range of 120°C to 132°C and still more preferably in the range from 128 to 130°C.

In a further preferred embodiment of the present invention the film has a haze determined according to ASTM D1003-00 on a cast film having a thickness of 50 μm in the range of 5 to below 20 %, preferably in the range of 8 to 16 % and more preferably in the range of 10 to 15 %.

All preferred aspects and embodiments as described above for the composition shall also hold for the film according to the present invention.

Coated Article

The present invention also relates to a coated article comprising at least one layer comprising the polymer composition according to the present invention and preferably said layer consists of this polymer composition.

According to one preferred embodiment in accordance with the present invention the coated article is an extrusion coated article. Said article may be produced by each process comprising an extrusion coating step.

The extrusion coating process may be carried out using conventional extrusion coating techniques. Hence, the composition according to the present invention may be fed, typically in the form of pellets, to an extruding device. From the extruder the polymer melt is passed preferably through a flat die to the substrate to be coated. The coated substrate is cooled on a chill roll, after which it is passed to edge trimmers and wound up.

The die width typically depends on the size of the extruder used. Thus with 90 mm extruders the width may suitably be within the range of 600 to 1,200 mm, with 115 mm extruders from 900 to 2,500 mm, with 150 mm extruders from 1,000 to 4,000 mm and with 200 mm extruders from 3,000 to 5,000 mm. The line speed (draw-down speed) is preferably 75 m/min or more, more preferably at least 100 m/min. In most commercially operating machines the line speed is preferably more than 300 m/min or more than 500 m/min. Modern machines are designed to operate at lines speeds of up to 1,000 m/min, for instance 300 to 800 m/min.

The temperature of the polymer melt is typically between 240 and 330°C. The polypropylene composition of the invention can be extruded onto the substrate as a monolayer coating or as one or several layers in a co-extrusion process, preferably as an outer layer. In a multilayer extrusion coating, a polymer layer structure as defined above and optionally the other polymeric layers may be co-extruded. It is possible to further perform ozone and/or corona treatment in a known way, if desired or necessary.

All preferred aspects and embodiments as described above for the composition shall also hold for the coated article according to the present invention.

Use

The present invention also relates to the use of the polymer composition, the film or the coated article according to the present invention as packaging material, preferably as a temperature resistant packaging material for food and/or medical products.

The invention will now be described with reference to the following non-limiting examples.

**Experimental Part**

**A. Measuring methods**

The following definitions of terms and determination methods apply for the above general description of the invention as well as to the below examples unless otherwise defined.

**Melt Flow Rate**

The melt flow rate (MFR) was determined according to ISO 1133 - Determination of the melt mass-flow rate (MFR) and melt volume-flow rate (MVR) of thermoplastics -- Part 1: Standard method and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230°C and a load of 2.16 kg.

**Quantification of microstructure by NMR spectroscopy (comonomer content & regiodefects)**

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probe head at 125°C using nitrogen gas for all pneumatics. Approximately 200 mg of material was dissolved in 3 ml of 1,2-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:E [wt%] = 100*(fE*28.06)/((fE*28.06)+((1-fE)*42.08))

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Xylene solubles (XCS, wt.-%)**

The xylene soluble (XCS) fraction as defined and described in the present invention was determined in line with ISO 16152 as follows: 2.0 g of the polymer were dissolved in 250 ml p-xylene at 135°C under agitation. After 30 minutes, the solution was allowed to cool for 15 minutes at ambient temperature and then allowed to settle for 30 minutes at 25 +/- 0.5°C. The solution was filtered with filter paper into two 100 ml flasks. The solution from the first 100 ml vessel was evaporated in nitrogen flow and the residue dried under vacuum at 90°C until constant weight is reached. The xylene soluble fraction (percent) can then be determined as follows:

$$XCS\% = (100*m*V0)/(m0*v)$$

m0 = initial polymer amount (g);
m = weight of residue (g);
V0 = initial volume (ml);
v = volume of analysed sample (ml).

**DSC analysis, melting (Tm) and crystallization temperature (Tc)**

Data were measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C.

Crystallization temperature ($T_c$) and crystallization enthalpy ($H_c$) were determined from the cooling step, while melting temperature ($T_m$) and melting enthalpy ($H_m$) are determined from the second heating step.

**Sealing initiation temperature (SIT)**

The method determines the sealing temperature range (sealing range) of polypropylene films, in particular blown films or cast films. The sealing temperature range is the temperature range, in which the films can be sealed according to conditions given below. The lower limit (heat sealing initiation temperature (SIT)) is the sealing temperature at which a sealing strength of 5+/-0.5 N is achieved. The upper limit (sealing end temperature (SET)) is reached, when the films stick to the sealing device. The sealing range was determined on a J&B Universal Sealing Machine Type 3000 with a 50 μm thickness film produced on a three-layer cast film co-extrusion line as described below with the following further parameters:

Specimen width: 25 mm
Seal Pressure: 0.67 N/mm2
Seal Time: 1 sec
Cool time: 30 sec
Peel Speed: 42 mm/sec
Start temperature: 80 °C
End temperature: 150 °C
Increments: 5°C
Specimen is sealed A to A at each sealbar temperature and seal strength (force) is determined at each step. The temperature is determined at which the seal strength reaches 5+/- 0,5 N.

**Tensile modulus (TM)**

Tensile modulus in machine direction (MD) and transverse direction (TD) was determined according to ISO 527-3 at 23°C on 50 μm cast films produced as described below. Testing was performed at a cross head speed of 1 mm/min for the linear modulus range, and at 10 mm/min for higher deformations.

**Haze**

The haze was determined according to ASTM D1003-00 on cast films produced as described below with a thickness of 50 μm, reported as haze (film), or on a 1 mm injection moulded specimen, reported as haze (1mm). The used 60 × 60 × 1 $mm^3$ specimen was prepared in accordance with EN ISO 1873-2.

**$F_{30}$ melt strength and $v_{30}$ melt extensibility**

The test described herein follows ISO 16790:2005. The strain hardening behaviour was determined by the method as described in the article "Rheotens-Mastercurves and Drawability of Polymer Melts", M. H. Wagner, Polymer Engineering and Science, Vol. 36, pages 925 to 935. The strain hardening behaviour of polymers is analysed with a Rheotens apparatus (product of Göttfert, Siemensstr.2, 74711 Buchen, Germany) in which a melt strand is elongated by drawing down with a defined acceleration. The Rheotens experiment simulates industrial spinning and extrusion processes. In principle a melt is pressed or extruded through a round die and the resulting strand is hauled off. The stress on the extrudate is recorded as a function of melt properties and measuring parameters (especially the ratio between output and haul-off speed, practically a measure for the extension rate). For the results presented below, the materials were extruded with a lab extruder HAAKE Polylab system and a gear pump with cylindrical die (LID = 6.0/2.0 mm). The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero). Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec$^2$. The Rheotens was operated in combination with the PC program EXTENS. This is a real-time data-acquisition program, which displays and stores the measured data of tensile force and drawdown speed. The end points of the Rheotens curve (force versus pulley rotary speed) is taken as the $F_{30}$ melt strength and drawability values.

**Crystalline and soluble fractions, comonomer content and intrinsic viscosity**

The crystalline (CF) and soluble fractions (SF) of the polypropylene (PP) compositions as well as the comonomer content and intrinsic viscosities (IV) of the respective fractions were analyzed by the CRYSTEX QC, Polymer Char (Valencia, Spain). The crystalline and amorphous fractions were separated through temperature cycles of dissolution at 160°C, crystallization at 40°C and re-dissolution in 1,2,4-trichlorobenzene (1,2,4-TCB) at 160°C. Quantification of SF and CF and determination of ethylene content (C2) were achieved by means of an infrared detector (IR4) and an online 2-capillary viscometer which was used for the determination of the intrinsic viscosity (IV). The IR4 detector is a multiple wavelength detector detecting IR absorbance at two different bands ($CH_3$ and $CH_2$) for the determination of the concentration and the ethylene content in ethylene-propylene copolymers. IR4 detector is calibrated with series of 8 EP copolymers with known ethylene content in the range of 2 wt.-% to 69 wt.-% (determined by $^{13}$C-NMR spectroscopy) and various concentration between 2 and 13 mg/ml for each used EP copolymer used for calibration. The amount of soluble fraction (SF) and crystalline Fraction (CF) were correlated through the XS calibration to the "Xylene Cold Soluble" (XCS) quantity and respectively Xylene Cold Insoluble (XCI) fractions, determined according to standard gravimetric method as per ISO16152. XCS calibration was achieved by testing various EP copolymers with XS content in the range of 2 to 31 wt.-%. The intrinsic viscosity (IV) of the parent EP copolymer and its soluble and crystalline fractions were determined with a use of an online 2-capillary viscometer and were correlated to corresponding IV's determined by standard method in decalin according to ISO 1628. Calibration was achieved with various EP PP copolymers with IV = 2 to 4 dL/g. A sample of the PP composition to be analyzed was weighed out in concentrations of 10mg/ml to 20mg/ml. After automated filling of the vial with 1,2,4-TCB containing 250 mg/l 2,6-tert-butyl-4- methylphenol (BHT) as antioxidant, the sample was dissolved at 160°C until complete dissolution is achieved, usually for 60 min, with constant stirring of 800rpm. A defined volume of the sample solution was injected into the column filled with inert support where the crystallization of the sample and separation of the soluble fraction from the crystalline part was taking place. This process was repeated two times. During the first injection the whole sample is measured at high temperature, determining the IV [dl/g] and the C2 [wt.-%] of the PP composition. During the second injection the soluble fraction (at low temperature) and the crystalline fraction (at high temperature) with the crystallization cycle are measured (wt.-% SF, wt.-% C2, IV). EP means ethylene propylene copolymer. PP means polypropylene.

**Hexane hot solubles (C6 FDA, wt.-%)**

FDA section 177.1520 1 g of a polymer film of 50 μm thickness as described in experimental part was added to 400 ml hexane at 50°C for 2 hours while stirring with a reflux cooler. After 2 hours the mixture was immediately filtered on a filter paper N°41. The precipitate was collected in an aluminium recipient and the residual hexane is evaporated on a steam bath under $N_2$ flow.

The amount of hexane solubles was determined by below formula:

$$((\text{wt. sample} + \text{wt. crucible})-(\text{wt. crucible})) / (\text{wt. sample}) \cdot 100.$$

**Glass Transition Temperature (Tg) and Storage Modulus (G')**

The glass transition temperature Tg and the storage modulus G'(23 °C) were determined by dynamic mechanical analysis (DMA) according to ISO 6721-7. The measurements were done in torsion mode on compression moulded samples (40 × 10 × 1.0 mm3) between -100°C and +150°C with a heating rate of 2°C/min and a frequency of 1 Hz.

**Intrinsic viscosity**

Intrinsic viscosity was measured according to DIN ISO 1628/1 and /3, October 1999 (in Decalin at 135°C). The intrinsic viscosity (IV) value increases with the molecular weight of a polymer.

**Flexural Modulus**

The flexural modulus is determined according to ISO 178. The test specimens have a dimension of 80 × 10 × 4.0 $mm^3$ (length × width × thickness) and are prepared by injection molding according to EN ISO 1873-2. The length of the span between the supports: 64 mm and the test speed 2 mm/min.

**Charpy Notched impact strength**

Charpy Notched impact strength was determined according to ISO 179 1eA at 23°C using 80×10×4 $mm^3$ test bars injection moulded in line with EN ISO 1873-2.

**B. Materials used**

**AO** is Irganox® **B 215** commercially available from BASF (synergistic processing and long-term thermal stabilizer system. It is a blend of Irgafos® 168 and Irganox® 1010).

**CaSt** is calcium stearate, commercially available under the tradename CEASIT AV FI from Bärlocher.

<u>Reactive modification for LCB PP (Component B)</u>

The base polymer used was a $MFR_2$ 0.23 g/10min polypropylene homopolymer, produced by Borealis with Advant ZN180M with single loop reactor. The final $MFR_2$ is adjusted by using $H_2$ applying the methods well-known the skilled person. The typical polymerization setting used was following: reactor temperature 70°C, 125 ppm $H_2$, Teal/C3 180 g/t C3, Teal /donor 6/1 wt.-%/wt.-%.

The reactive modification of the polymer powders was performed in line with the process description of EP 2520425. Both the butadiene (BD) and the peroxide (POX) were pre-mixed with the polymer powder prior to the melt-mixing step in a horizontal mixer with paddle stirrer at a temperature of 65°C, maintaining an average residence time of 15 minutes. The premixture was transferred under inert atmosphere to a co-rotating twin screw extruder of the type Theyson TSK60 having a barrel diameter of 60 mm and an L/D-ratio of 48 equipped with a high intensity mixing screw having three kneading zones and a two-step degassing setup. A melt temperature profile with initial temperature T1 = 240°C in the feed zone, maximum temperature T2 = 280°C in the last kneading zone and a final temperature T3 = 230°C in the die zone, all temperatures being defined as barrel temperatures, was selected. The screw speed was set at 350 rpm. The recipe was 0.45wt.-% TRIGONOX BPIC-C75, 0.1 wt.-% BD, 0.13 wt.-% AO and 0.1wt.-% CaSt. The LCB PP has Density = 905 kg/$m^3$ determined according to ISO 1183, Melt Flow Rate (230°C/2.16 kg) = 10 g/10 min determined according to ISO 1133, F30 = 31.2 cN and $v_{30}$ = 266 mm/s determined according to ISO 16790.

Polypropylene **(PP HECO1,** heterophasic propylene random copolymer) was prepared as follows.

<u>Catalyst system for PP HECO1</u>

Catalyst complex

The following metallocene complex has been used as described in WO 2019/179959 in IE2.

Preparation of MAO-silica support

A steel reactor equipped with a mechanical stirrer and a filter net was flushed with nitrogen 10 and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.-% solution of MAO in toluene (9.0 kg) from Lanxess was added via feed line on the top of the reactor within 70 min. The reaction mixture was then heated up to 90°C and stirred at said temperature for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60° under nitrogen flow for 2 hours and then for 5 hours under vacuum (-0.5 barg) with stirring. MAO treated support was collected as a free-flowing white powder found to contain 12.2 wt.-% Al.

Single site catalyst system preparation

30 wt.-% MAO in toluene (0.7 kg) was added into a steel nitrogen blanked reactor via a burette at 20°C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under nitrogen flow at 60°C for 2h and additionally for 5 h under vacuum (-0.5 barg) under stirring.

The polymerization for preparing the inventive polymer of PP HECOL was performed in a Borstar pilot plant with a 3-reactor set-up (loop - gas phase reactor (GPR 1) - gas phase reactor (GPR 2) and a pre-polymerizer, using the catalyst system as described above.

In Table 1, the polymerization conditions for PP HECOL and the final properties of the resin are given.

**Table 1:** Polymerization conditions for PP HECO1 and final properties.

| **Prepolymerizer** | Unit | | **GPR2** | Unit | |
|---|---|---|---|---|---|
| Temperature | °C | 20.0 | Temperature | °C | 70 |
| H2/C3 | mol/kmol | 0.07 | | wt.-% | |
| | kg/h | | Pressure | barg | 25 |
| Pressure | barg | 53 | C2/C3 | mol/kmol | 457 |
| | g/h | 6.5 | H2/C2 | mol/kmol | 3,1 |
| **Loop** | | | GPR split | % | 25 |
| MFR | g/10min | 278.0 | **Final Powder** | | |
| Temperature | °C | 75 | SF | wt.-% | 26.37 |
| H2/C3 | mol/kmol | 0.76 | C2-content | wt.-% | 3.32 |
| | mol/kmol | | C2(SF) | wt.-% | 10.5 |
| XS | wt.-% | 1.20 | C2(CF) | wt.-% | 0 |
| DSC $T_m$ | °C | 153 | IV(SF) | dl/g | 3.15 |
| DSC $T_{cr}$. | °C | 117 | IV(CF) | dl/g | 1.08 |
| Matrix split | % | 42 | $T_m$ | °C | 152 |
| **GPR1** | | | MFR | g/10min | 21.6 |
| MFR | g/10min | 172 | G' | MPa | 450 |
| Temperature | °C | 80 | Tg1 | °C | 0 |
| Pressure | barg | 22 | Tg2 | °C | -22 |
| H2/C3 | mol/kmol | 2.86 | | | |

(continued)

| Prepolymerizer | Unit | | GPR2 | Unit | |
|---|---|---|---|---|---|
| XS | wt.-% | 0.80 | | | |
| DSC $T_m$ | °C | 152 | | | |
| DSC $T_{cr}$. | °C | 115 | | | |
| Matrix split | % | 33 | | | |

Polypropylene **(PP HECO2,** heterophasic propylene random copolymer) was prepared as described in WO 2016/066453 A2. PP HECO2 is CE2 according to WO 2016/066453 A2 (see page 36 for the catalyst (Ziegler-Natta catalyst) and Table 4 on page 39 for the polymerisation conditions. The polymer powders (PP HECO1 and PP HECO2) were compounded in a co-rotating twin-screw extruder Coperion ZSK 57 at 220°C with recipe shown in Table 2.

**C. Film manufacturing**

The cast films according to the Inventive Example (IE1) and the Comparative Examples (CE1 and CE2) have been produced on a Collin 30 cast film line, with melt temperature of 240°C, chill roll temperature 20°C. The obtained films, all had an overall thickness of 50 μm.

**D. Results and discussion**

**Table 2:** Compositions, films and properties.

| **Component** | **Unit** | **IE1** | **CE1** | **CE2** |
|---|---|---|---|---|
| HECOL (A) | wt.-% | 49.7 | 1.75* | 99.7 |
| HECO2 | wt.-% | - | 39.75 | - |
| LCB PP (B) | wt.-% | 50 | 58.20 | - |
| AO | wt.-% | 0.25 | 0.25 | 0.25 |
| CaSt | wt.-% | 0.05 | 0.05 | 0.05 |
| **Properties Composition** | | | | |
| $MFR_2$ | g/10min | 14 | 10 | 19 |
| $F_{30}$ | cN | 4 | 4 | 1 |
| $v_{30}$ | mm/s | 247 | 244 | 146 |
| XCS | wt.-% | 14.97 | 13.35 | n.m. |
| IV(XCS) | dl/g | 3.11 | 2.48 | n.m. |
| Flexural modulus | MPa | 1272 | 1448 | 730 |
| NIS/23°C | $kJ/m^2$ | 5.3 | 7.1 | 5.8 |
| Haze (1mm) | % | 49.7 | 93 | 45.5 |
| C6 FDA | wt.-% | 1.4 | 2.2 | 1.1 |
| C6 FDA/ XCS[1] | | 0.09 | 0.16 | n.a. |
| **Properties 50 μm Cast Film** | | | | |
| TM (MD) | MPa | 441 | 770 | 146 |
| TM (TD) | MPa | 456 | 713 | 166 |
| SIT | °C | 129 | 133 | 123 |

(continued)

| Properties 50 µm Cast Film | | | | |
|---|---|---|---|---|
| Haze (film) | % | 14.7 | 37 | 43 |
| n.m. = not measured; n.a. = not available; *used as carrier for AO and CaSt.<br>[1] C6 FDA/ XCS is the ratio between C6 FDA to XCS | | | | |

As can be gathered from Table 2, the polymer composition according to the inventive example IE1, produced by using a single site catalyst, has a clear indication of long chain branching (LCB) expressed by $F_{30}$ melt strength and $v_{30}$ melt extensibility. Another merit obtained by the addition of component (B) in the inventive example is the stiffness (1272 MPa vs. 730 MPa) of the polymer composition, which is increased significantly with only a minor loss of the toughness (5.3 kJ/m$^2$ vs 5.8 kJ/m$^2$), while the polymer composition according to CE1 has a toughness reduction of about 80 % (7.1 kJ/m$^2$ vs. 33 kJ/m$^2$, see reference above CE2 in WO 2016/066453 A2) by the addition of component (B). The polymer composition according to the IE also has a higher purity and much lower extractables. This is reflected by the total extractables (C6 FDA) and also the ratio between C6 FDA to XCS. In addition, the film made of the polymer composition according to the present invention shows a very low haze, very good Sealing Initiation Temperature and an excellent balance between melt strength and haze.

## Claims

**1.** A polymer composition comprising at least the following components:

A) 30.0 to 80.0 wt.-% based on the overall weight of the polymer composition of a single-site catalyst produced $C_2C_3$ heterophasic copolymer (HECO); whereby said copolymer has

• a melting point in the range of 150 to 162°C determined by differential scanning calorimetry according to ISO 11357-3;
• a $MFR_2$ (230°C, 2.16 kg) determined according to ISO 1133 in the range of 5.0 to 40.0 g/10 min;
• a total C2-content in the range of 1.0 to 10.0 wt.-% based on the overall weight of component (A); and
• a soluble fraction (SF) based on the total weigh of component (A) in the range of 10.0 to 50.0 wt.-% determined according to CRYSTEX QC, Polymer Char as described in the description;

B) 20.0 to 70.0 wt.-% based on the overall weight of the polymer composition of a propylene homopolymer; whereby said propylene homopolymer has

• a $MFR_2$ (190°C, 2.16 kg) determined according to ISO 1133 in the range of 1.0 to 20.0 g/10 min; and
• a $F_{30}$ melt strength determined according to ISO 16790 of at least 10 cN;

with the proviso that the weight proportions of components A) and B) add up to 100 wt.-%.

**2.** The polymer composition according to claim 1, **characterized in that**,

component (A) has a melting point determined by differential scanning calorimetry according to ISO 11357-3in the range of 151 to 160°C, preferably in the range of 151 to 155°C and more preferably in the range of 151 to 154°C; and/or
component (A) has a $MFR_2$ (230°C, 2.16 kg) determined according to ISO 1133 in the range of 10.0 to 30.0 g/10 min, preferably in the range of 15.0 to 25.0 g/10 min and more preferably in the range of 20.0 to 23.0 g/10 min; and/or
component (A) has a total C2-content in the range of 1.0 to 8.0 wt.-%, preferably in the range of 1.5 to 6.0 wt.-% and more preferably in the range of 2.5 to 4.0 wt.-% based on the overall weight of component (A); and/or
component (A) has a soluble fraction (SF) based on the total weight of component (A) in the range of 15.0 to 40.0 wt.-%, preferably in the range of 20.0 to 30.0 wt.-% and more preferably in the range of 24.0 to 28.0 wt.-% determined according to CRYSTEX QC, Polymer Char as described in the description.

**3.** The polymer composition according to claim 1 or 2, **characterized in that**,

component (A) has a C2-content of the soluble fraction (SF) based on the total weight of the soluble fraction in the range of 5 to 40 wt.-%, preferably in the range of 8 to 30 wt.-%, more preferably in the range 8 to 25 wt.-% and even more preferably in the range of 9 to 12 wt.-% determined according to CRYSTEX QC, Polymer Char as described in the description; and/or

component (A) has a C2-content of the crystalline fraction (CF) based on the total weight of the crystalline fraction which is below 4 wt.-%, preferably below 2 wt.-%, more preferably in the range of 0 to 1 wt.-% and even more preferably is 0 wt.-% determined according to CRYSTEX QC, Polymer Char as described in the description; and/or

component (A) has an intrinsic viscosity (IV) of the soluble fraction (SF) which is in the range of 1.0 to 5.0 dl/g, preferably in the range of 2.0 to 4.0 dl/g, more preferably in the range of 2.2 to 3.4 dl/g and even more preferably in the range of 3.0 to 3.3 dl/g determined according to CRYSTEX QC, Polymer Char as described in the description; and/or

component (A) has an intrinsic viscosity (IV) of the crystalline fraction (CF) which is in the range of 0.5 to 4.0 dl/g, preferably in the range of 0.8 to 2.0 dl/g and more preferably in the range of 1.0 to 1.2 dl/g determined according to CRYSTEX QC, Polymer Char as described in the description.

**4.** The polymer composition according to any one of the preceding claims, **characterized in that**,

component (B) has a $MFR_2$ (230°C, 2.16 kg) determined according to ISO 1133 in the range of 1.0 to 15.0 g/10 min, preferably in the range of 3.0 to 15.0 g/10 min, more preferably in the range of 6.0 to 14.0 g/10 min and even more preferably in the range of 8.0 to 12.0 g/10 min; and/or

component (B) has a $F_{30}$ melt strength determined according to ISO 16790 of at least 20 cN, preferably of at least 30 cN and more preferably in the range of 30 to 60 cN; and/or

component (B) has a $v_{30}$ melt extensibility determined according to ISO 16790 of at least 200 mm/s, preferably of at least 250 mm/s and more preferably in the range of 250 to 300 mm/s; and/or

component (B) has a density determined according to ISO1183 in the range of 895 to 920 kg/$m^3$, preferably in the range of 900 to 910 kg/$m^3$ and more preferably in the range of 904 to 906 kg/$m^3$.

**5.** The polymer composition according to any one of the preceding claims, **characterized in that**,

the polymer composition has a $MFR_2$ (230°C, 2.16 kg) determined according to ISO 1133 in the range of 4.0 to 30.0 g/10 min, preferably in the range of 8.0 to 20.0 g/10 min and more preferably in the range of 12.0 to 16.0 g/10 min; and/or

the polymer composition has a $F_{30}$ melt strength determined according to ISO 16790 of at least 2 cN, preferably of at least 3 cN and more preferably in the range of 3 to 5 cN; and/or

the polymer composition has a $v_{30}$ melt extensibility determined according to ISO 16790 of at least 200 mm/s, preferably of at least 230 mm/s, more preferably in the range of 240 to 300 mm/s and still more preferably in the of 240 to 260 mm/s; and/or

the polymer composition has a $MFR_2$ (230°C, 2.16 kg) determined according to ISO 1133 in the in the range of 12.0 to 16.0 g/10 min and a F30 determined according to ISO 16790 in the range of 3 to 5 cN.

**6.** The polymer composition according to any one of the preceding claims, **characterized in that**, component (A) has been produced in the presence of a metallocene catalyst.

**7.** The polymer composition according to any one of the preceding claims, **characterized in that**, the polymer composition comprises at least one additive C), preferably selected from the group consisting of slip agents, acid scavengers, UV-stabilisers, pigments, antioxidants, additive carriers, nucleating agents and mixtures thereof, whereby these additives preferably are present in 0.1 to 5.0 wt.-% and more preferably in 0.1 to 4.0 wt.-% based on the overall weight of the polymer composition.

**8.** A film comprising the polymer composition according to anyone of the claims 1 to 7 and preferably consisting of this polymer composition.

**9.** The film according to claim 8, **characterized in that**, the film has a tensile modulus determined according to ISO 527-3 at 23°C on a cast film having a thickness of 50 μm in machine direction as well as in transverse direction in the range of 200 to 1000 MPa, preferably in the range of 300 to 700 MPa and more preferably in the range of 400 to 500 MPa.

**10.** The film according to claim 8 or 9, **characterized in that**,
the film has a sealing initiation temperature determined as described in the description on a cast film having a thickness of 50 μm in the range of 100°C to below 140°C, preferably in the range of 120°C to 135°C, more preferably in the range of 120°C to 132°C and still more preferably in the range of 128 to 130°C.

**11.** The film according to any one of claims 8 to 10, **characterized in that**,
the film has a haze determined according to ASTM D1003-00 on a cast film having a thickness of 50 μm in the range of 5 to below 20 %, preferably in the range of 8 to 16 % and more preferably in the range of 10 to 15 %.

**12.** A coated article comprising at least one layer comprising the polymer composition according to any one of claims 1 to 7, preferably the layer consists of this polymer composition.

**13.** The coated article according to claim 12, **characterized in that**,
the article is an extrusion coated article.

**14.** A process for manufacturing the coated article according to claim 12 comprising an extrusion coating step.

**15.** Use of the coated article according to claim 12 or 13 as packaging material,
preferably as a temperature resistant packaging material for food and/or medical products.

**Patentansprüche**

**1.** Polymerzusammensetzung, umfassend mindestens die folgenden Komponenten:

A) 30,0 bis 80,0 Gew.-%, bezogen auf das Gesamtgewicht der Polymerzusammensetzung, eines mit einem Single-Site-Katalysator hergestellten heterophasischen $C_2C_3$-Copolymers (HECO), wobei das Copolymer Folgendes aufweist

- einen Schmelzpunkt im Bereich von 150 bis 162°C, bestimmt durch dynamische Differenzkalorimetrie nach ISO 11357-3;
- einen $MFR_2$ (230°C, 2,16 kg), bestimmt nach ISO 1133, im Bereich von 5,0 bis 40,0 g/10 min;
- einen Gesamt-C2-Gehalt im Bereich von 1,0 bis 10,0 Gew.-%, bezogen auf das Gesamtgewicht der Komponente (A); und
- einen löslichen Anteil (SF), bezogen auf das Gesamtgewicht der Komponente (A), im Bereich von 10,0 bis 50,0 Gew.-%, bestimmt gemäß CRYSTEX QC, Polymer Char, wie in der Beschreibung beschrieben;

B) 20,0 bis 70,0 Gew.-%, bezogen auf das Gesamtgewicht der Polymerzusammensetzung, eines Propylenhomopolymers, wobei das Propylenhomopolymer aufweist

- einen $MFR_2$ (190°C, 2,16 kg), bestimmt nach ISO 1133, im Bereich von 1,0 bis 20,0 g/10 min; und
- eine $F_{30}$-Schmelzfestigkeit, bestimmt nach ISO 16790, von mindestens 10 cN;

mit der Maßgabe, dass sich die Gewichtsanteile der Komponenten A) und B) zu 100 Gew.-% ergänzen.

**2.** Polymerzusammensetzung nach Anspruch 1, **dadurch gekennzeichnet, dass**

die Komponente (A) einen Schmelzpunkt, bestimmt durch dynamische Differenzkalorimetrie nach ISO 11357-3, im Bereich von 151 bis 160°C, bevorzugt im Bereich von 151 bis 155°C und stärker bevorzugt im Bereich von 151 bis 154°C, aufweist; und/oder
die Komponente (A) einen $MFR_2$ (230°C, 2,16 kg), bestimmt nach ISO 1133, im Bereich von 10,0 bis 30,0 g/10 min, bevorzugt im Bereich von 15,0 bis 25,0 g/10 min und stärker bevorzugt im Bereich von 20,0 bis 23,0 g/10 min, aufweist; und/oder
die Komponente (A) einen Gesamt-C2-Gehalt im Bereich von 1,0 bis 8,0 Gew.-%, bevorzugt im Bereich von 1,5 bis 6,0 Gew.-% und stärker bevorzugt im Bereich von 2,5 bis 4,0 Gew.-%, bezogen auf das Gesamtgewicht der Komponente (A), aufweist; und/oder
die Komponente (A) einen löslichen Anteil (SF), bezogen auf das Gesamtgewicht der Komponente (A), im Bereich von 15,0 bis 40,0 Gew.-%, bevorzugt im Bereich von 20,0 bis 30,0 Gew.-% und stärker bevorzugt im

Bereich von 24,0 bis 28,0 Gew.-% aufweist, bestimmt gemäß CRYSTEX QC, Polymer Char, wie in der Beschreibung beschrieben.

**3.** Polymerzusammensetzung nach Anspruch 1 oder 2, **dadurch gekennzeichnet, dass**

die Komponente (A) einen C2-Gehalt des löslichen Anteils (SF), bezogen auf das Gesamtgewicht des löslichen Anteils, im Bereich von 5 bis 40 Gew.-%, bevorzugt im Bereich von 8 bis 30 Gew.-%, stärker bevorzugt im Bereich von 8 bis 25 Gew.-% und noch stärker bevorzugt im Bereich von 9 bis 12 Gew.-% aufweist, bestimmt gemäß CRYSTEX QC, Polymer Char, wie in der Beschreibung beschrieben; und/oder
die Komponente (A) einen C2-Gehalt des kristallinen Anteils (CF), bezogen auf das Gesamtgewicht des kristallinen Anteils, aufweist, der unter 4 Gew.-%, bevorzugt unter 2 Gew.-%, stärker bevorzugt im Bereich von 0 bis 1 Gew.-% liegt und noch stärker bevorzugt 0 Gew.-% beträgt, bestimmt gemäß CRYSTEX QC, Polymer Char, wie in der Beschreibung beschrieben; und/oder
die Komponente (A) eine intrinsische Viskosität (IV) des löslichen Anteils (SF) aufweist, die im Bereich von 1,0 bis 5,0 dl/g, bevorzugt im Bereich von 2,0 bis 4,0 dl/g, stärker bevorzugt im Bereich von 2,2 bis 3,4 dl/g und noch stärker bevorzugt im Bereich von 3,0 bis 3,3 dl/g liegt, bestimmt gemäß CRYSTEX QC, Polymer Char, wie in der Beschreibung beschrieben; und/oder
die Komponente (A) eine intrinsische Viskosität (IV) des kristallinen Anteils (CF) aufweist, die im Bereich von 0,5 bis 4,0 dl/g, bevorzugt im Bereich von 0,8 bis 2,0 dl/g und stärker bevorzugt im Bereich von 1,0 bis 1,2 dl/g liegt, bestimmt gemäß CRYSTEX QC, Polymer Char, wie in der Beschreibung beschrieben.

**4.** Polymerzusammensetzung nach einem der vorhergehenden Ansprüche, **dadurch gekennzeichnet, dass**

die Komponente (B) einen $MFR_2$ (230°C, 2,16 kg), bestimmt nach ISO 1133, im Bereich von 1,0 bis 15,0 g/10 min, bevorzugt im Bereich von 3,0 bis 15,0 g/10 min, stärker bevorzugt im Bereich von 6,0 bis 14,0 g/10 min und noch stärker bevorzugt im Bereich von 8,0 bis 12,0 g/10 min aufweist; und/oder
die Komponente (B) eine $F_{30}$-Schmelzfestigkeit, bestimmt nach ISO 16790, von mindestens 20 cN, bevorzugt von mindestens 30 cN und stärker bevorzugt im Bereich von 30 bis 60 cN aufweist; und/oder
die Komponente (B) eine $v_{30}$-Schmelzdehnbarkeit, bestimmt nach ISO 16790, von mindestens 200 mm/s, bevorzugt von mindestens 250 mm/s und stärker bevorzugt im Bereich von 250 bis 300 mm/s aufweist; und/oder
die Komponente (B) eine Dichte, bestimmt nach ISO1183, im Bereich von 895 bis 920 kg/$m^3$, bevorzugt im Bereich von 900 bis 910 kg/$m^3$ und stärker bevorzugt im Bereich von 904 bis 906 kg/$m^3$ aufweist.

**5.** Polymerzusammensetzung nach einem der vorhergehenden Ansprüche, **dadurch gekennzeichnet, dass**

die Polymerzusammensetzung einen $MFR_2$ (230°C, 2,16 kg), bestimmt nach ISO 1133, im Bereich von 4,0 bis 30,0 g/10 min, bevorzugt im Bereich von 8,0 bis 20,0 g/10 min und stärker bevorzugt im Bereich von 12,0 bis 16,0 g/10 min aufweist; und/oder
die Polymerzusammensetzung eine $F_{30}$-Schmelzfestigkeit, bestimmt nach ISO 16790, von mindestens 2 cN, bevorzugt von mindestens 3 cN und stärker bevorzugt im Bereich von 3 bis 5 cN aufweist; und/oder
die Polymerzusammensetzung $v_{30}$-Schmelzdehnbarkeit, bestimmt nach ISO 16790, von mindestens 200 mm/s, bevorzugt von mindestens 230 mm/s, stärker bevorzugt im Bereich von 240 bis 300 mm/s und noch stärker bevorzugt im Bereich von 240 bis 260 mm/s aufweist; und/oder
die Polymerzusammensetzung einen $MFR_2$ (230°C, 2,16 kg), bestimmt nach ISO 1133, im Bereich von 12,0 bis 16,0 g/10 min und eine F30, bestimmt nach ISO 16790, im Bereich von 3 bis 5 cN aufweist.

**6.** Polymerzusammensetzung nach einem der vorhergehenden Ansprüche, **dadurch gekennzeichnet, dass** die Komponente (A) in Gegenwart eines Metallocenkatalysators hergestellt wurde.

**7.** Polymerzusammensetzung nach einem der vorhergehenden Ansprüche, **dadurch gekennzeichnet, dass** die Polymerzusammensetzung mindestens ein Additiv C) umfasst, bevorzugt ausgewählt aus der Gruppe bestehend aus Gleitmitteln, Säurefängern, UV-Stabilisatoren, Pigmenten, Antioxidantien, Additivträgem, Nukleierungsmitteln und Mischungen davon, wobei diese Additive vorzugsweise in 0,1 bis 5,0 Gew.-% und stärker bevorzugt in 0,1 bis 4,0 Gew.-%, bezogen auf das Gesamtgewicht der Polymerzusammensetzung, vorhanden sind.

**8.** Folie, die die Polymerzusammensetzung nach einem der Ansprüche 1 bis 7 enthält und vorzugsweise aus dieser Polymerzusammensetzung besteht.

9. Folie nach Anspruch 8, **dadurch gekennzeichnet, dass** die Folie einen Zugmodul, bestimmt nach ISO 527-3 bei 23°C an einer gegossenen Folie mit einer Dicke von 50 μm sowohl in Maschinenrichtung als auch in Querrichtung, im Bereich von 200 bis 1000 MPa, bevorzugt im Bereich von 300 bis 700 MPa und stärker bevorzugt im Bereich von 400 bis 500 MPa aufweist.

10. Folie nach Anspruch 8 oder 9, **dadurch gekennzeichnet, dass** die Folie eine Siegelstarttemperatur, bestimmt, wie in der Beschreibung beschrieben, an einer gegossenen Folie mit einer Dicke von 50 μm, im Bereich von 100°C bis unter 140°C, bevorzugt im Bereich von 120°C bis 135°C, stärker bevorzugt im Bereich von 120°C bis 132°C und noch stärker bevorzugt im Bereich von 128 bis 130°C, aufweist.

11. Folie nach einem der Ansprüche 8 bis 10, **dadurch gekennzeichnet, dass** die Folie eine Trübung, bestimmt nach ASTM D1003-00 an einer gegossenen Folie mit einer Dicke von 50 μm, im Bereich von 5 bis unter 20%, bevorzugt im Bereich von 8 bis 16% und stärker bevorzugt im Bereich von 10 bis 15% aufweist.

12. Beschichteter Gegenstand, umfassend mindestens eine Schicht, die die Polymerzusammensetzung nach einem der Ansprüche 1 bis 7 umfasst, wobei die Schicht vorzugsweise aus dieser Polymerzusammensetzung besteht.

13. Beschichteter Gegenstand nach Anspruch 12, **dadurch gekennzeichnet, dass** der Gegenstand ein extrusionsbeschichteter Gegenstand ist.

14. Verfahren zur Herstellung des beschichteten Gegenstands nach Anspruch 12, umfassend einen Schritt der Extrusionsbeschichtung.

15. Verwendung des beschichteten Gegenstandes nach Anspruch 12 oder 13 als Verpackungsmaterial, vorzugsweise als temperaturbeständiges Verpackungsmaterial für Lebensmittel und/oder medizinische Produkte.

## Revendications

1. Composition polymère comportant au moins les composants suivants :

   (A) 30,0 à 80,0 % en poids, sur la base du poids total de la composition polymère, d'un copolymère hétérophasique en $C_2$ à $C_3$ (HECO) produit avec un catalyseur monosite ; en sorte que ledit copolymère a

   - un point de fusion dans la plage de 150 à 162 °C déterminé par analyse calorimétrique différentielle conformément à l'ISO 11357-3 ;
   - un $MFR_2$ (230 °C, 2,16 kg) déterminé conformément à l'ISO 1133 dans la plage de 5,0 à 40,0 g/10 min ;
   - une teneur totale en C2 dans la plage de 1,0 à 10,0 % en poids basé sur le poids total du composant (A) ; et
   - une fraction soluble (SF) basée sur le poids total du composant (A) dans la plage de 10,0 à 50,0 % en poids, déterminée selon CRYSTEX QC, Polymer Char tel que décrit dans la description ;

   (B) 20,0 à 70,0 % en poids, sur la base du poids total de la composition polymère, d'un homopolymère de propylène ; en sorte que ledit homopolymère de propylène a

   - un $MFR_2$ (190 °C, 2,16 kg) déterminé conformément à l'ISO 1133 dans la plage de 1,0 à 20,0 g/10 min ; et
   - une résistance à l'état fondu $F_{30}$ déterminée conformément à l'ISO 16790 d'au moins 10 cN ;

   à condition que la somme des proportions pondérales des composants A) et B) donne 100 % en poids.

2. Composition polymère selon la revendication 1, **caractérisée en ce que**

   le composant (A) a un point de fusion déterminé par analyse calorimétrique différentielle conformément à l'ISO 11357-3 dans la plage de 151 à 160 °C, de manière préférée dans la plage de 151 à 155 °C et de manière plus préférée dans la plage de 151 à 154 °C ; et/ou
   le composant (A) a un $MFR_2$ (230°C, 2,16 kg) déterminé conformément à l'ISO 1133 dans la plage de 10,0 à 30,0 g/10 min, de manière préférée dans la plage de 15,0 à 25,0 g/10 min et de manière plus préférée dans la

plage de 20,0 à 23,0 g/10 min ; et/ou
le composant (A) a une teneur totale en C2 dans la plage de 1,0 à 8,0 % en poids, de manière préférée dans la plage de 1,5 à 6,0 % en poids et de manière plus préférée dans la plage de 2,5 à 4,0 % en poids, sur la base du poids total du composant (A) ; et/ou
le composant (A) a une fraction soluble (SF) basée sur le poids total du composant (A) dans la plage de 15,0 à 40,0 % en poids, de manière préférée dans la plage de 20,0 à 30,0 % en poids et de manière plus préférée dans la plage de 24,0 à 28,0 % en poids, déterminée selon CRYSTEX QC, Polymer Char tel que décrit dans la description.

**3.** Composition polymère selon la revendication 1 ou 2, **caractérisée en ce que**

le composant (A) a une teneur en C2 de la fraction soluble (SF) basée sur le poids total de la fraction soluble dans la plage de 5 à 40,0 % en poids, de manière préférée dans la plage de 8 à 30,0 % en poids, de manière plus préférée dans la plage de 8 à 25,0 % en poids et de manière encore plus préférée dans la plage de 9 à 12 % en poids, déterminée selon CRYSTEX QC, Polymer Char tel que décrit dans la description ; et/ou
le composant (A) a une teneur en C2 de la fraction cristalline (CF) basée sur le poids total de la fraction cristalline qui est inférieure à 4 % en poids, de manière préférée inférieure à 2 % en poids, de manière plus préférée dans la plage de 0 à 1 % en poids et de manière encore plus préférée est de 0 % en poids, déterminée selon CRYSTEX QC, Polymer Char tel que décrit dans la description ; et/ou
le composant (A) a une viscosité intrinsèque (IV) de la fraction soluble (SF) qui est dans la plage de 1,0 à 5,0 dl/g, de manière préférée dans la plage de 2,0 à 4,0 dl/g, de manière plus préférée dans la plage de 2,2 à 3,4 dl/g et de manière encore plus préférée de 3,0 à 3,3 dl/g, déterminée selon CRYSTEX QC, Polymer Char tel que décrit dans la description ; et/ou
le composant (A) a une viscosité intrinsèque (IV) de la fraction cristalline (CF) qui est dans la plage de 0,5 à 4,0 dl/g, de manière préférée dans la plage de 0,8 à 2,0 dl/g et de manière plus préférée dans la plage de 1,0 à 1,2 dl/g, déterminée selon CRYSTEX QC, Polymer Char tel que décrit dans la description.

**4.** Composition polymère selon l'une quelconque des revendications précédentes, **caractérisée en ce que**

le composant (B) a un $MFR_2$ (230 °C, 2,16 kg) déterminé conformément à l'ISO 1133 dans la plage de 1,0 à 15,0 g/10 min, de manière préférée dans la plage de 3,0 à 15,0 g/10 min, de manière plus préférée dans la plage de 6,0 à 14,0 g/10 min et de manière encore plus préférée dans la plage de 8,0 à 12,0 g/10 min ; et/ou
le composant (B) a une résistance à l'état fondu $F_{30}$ déterminée conformément à l'ISO 16790 d'au moins 20 cN, de manière préférée d'au moins 30 cN et de manière plus préférée dans la plage de 30 à 60 cN ; et/ou
le composant (B) a une extensibilité à l'état fondu $v_{30}$ déterminée conformément à l'ISO 16790 d'au moins 200 mm/s, de manière préférée d'au moins 250 mm/s et de manière plus préférée dans la plage de 250 à 300 mm/s ; et/ou
le composant (B) a une masse volumique déterminée conformément à l'ISO 1133 dans la plage de 895 à 920 $kg/m^3$, de manière préférée dans la plage de 900 à 910 $kg/m^3$ et de manière plus préférée dans la plage de 904 à 906 $kg/m^3$.

**5.** Composition polymère selon l'une quelconque des revendications précédentes, **caractérisée en ce que**

la composition polymère a un $MFR_2$ (230 °C, 2,16 kg) déterminé conformément à l'ISO 1133 dans la plage de 4,0 à 30,0 g/10 min, de manière préférée dans la plage de 8,0 à 20,0 g/10 min et de manière plus préférée dans la plage de 12,0 à 16,0 g/10 min ; et/ou
la composition polymère a une résistance à l'état fondu $F_{30}$ déterminée conformément à l'ISO 16790 d'au moins 2 cN, de manière préférée d'au moins 3 cN et de manière plus préférée dans la plage de 3 à 5 cN ; et/ou
la composition polymère a une extensibilité à l'état fondu $v_{30}$ déterminée conformément à l'ISO 16790 d'au moins 200 mm/s, de manière préférée d'au moins 230 mm/s, de manière plus préférée dans la plage de 240 à 300 mm/s et de manière encore plus préférée dans la plage de 240 à 260 mm/s ; et/ou
la composition polymère a un $MFR_2$ (230 °C, 2,16 kg) déterminé conformément à l'ISO 1133 dans la plage de 12,0 à 16,0 g/10 min et une $F_{30}$ déterminée conformément à l'ISO 16790 dans la plage de 3 à 5 cN.

**6.** Composition polymère selon l'une quelconque des revendications précédentes, **caractérisée en ce que** le composant (A) a été produit en présence d'un catalyseur métallocène.

**7.** Composition polymère selon l'une quelconque des revendications précédentes, **caractérisée en ce que**

la composition polymère comporte au moins un additif C), de préférence choisi parmi le groupe constitué d'agents glissants, de fixateurs d'acide, d'agents anti-UV, de pigments, d'anti-oxydants, de supports d'additif, d'agents de nucléation et de mélanges de ceux-ci, en sorte que ces additifs sont de préférence présents dans 0,1 à 5,0 % en poids et de manière plus préférée dans 0,1 à 4,0 % en poids basé sur le poids total de la composition polymère.

**8.** Film comportant la composition polymère selon l'une quelconque des revendications 1 à 7 et de préférence constitué de cette composition polymère.

**9.** Film selon la revendication 8, **caractérisé en ce que** le film a un module d'élasticité en traction déterminé conformément à l'ISO 527-3 à 23 °C sur un film coulé ayant une épaisseur de 50 μm en sens machine ainsi qu'en sens travers dans la plage de 200 à 1 000 MPa, de manière préférée dans la plage de 300 à 700 MPa et de manière plus préférée dans la plage de 400 à 500 MPa.

**10.** Film selon la revendication 8 ou 9, **caractérisé en ce que** le film a une température d'initiation d'étanchéité déterminée comme décrit dans la description sur un film coulé ayant une épaisseur de 50 □m dans la plage de 100 °C à moins de 140 °C, de manière préférée dans la plage de 120 °C à 135 °C, de manière plus préférée dans la plage de 120 °C à 132 °C et de manière encore plus préférée dans la plage de 128 à 130 °C.

**11.** Film selon l'une quelconque des revendications 8 à 10, **caractérisé en ce que** le film a un trouble déterminé conformément à l'ASTM D1003-00 sur un film coulé ayant une épaisseur de 50 μm dans la plage de 5 à moins de 20 %, de manière préférée dans la plage de 8 à 16 % et de manière plus préférée dans la plage de 10 à 15 %.

**12.** Article revêtu comportant au moins une couche comportant la composition polymère selon l'une quelconque des revendications 1 à 7, la couche étant de préférence constituée de cette composition polymère.

**13.** Article revêtu selon la revendication 12, **caractérisé en ce que** l'article est un article revêtu par extrusion.

**14.** Procédé pour fabriquer l'article revêtu selon la revendication 12, comportant une étape de couchage par extrusion.

**15.** Utilisation de l'article revêtu selon la revendication 12 ou 13 comme matériau d'emballage, de préférence comme un matériau d'emballage résistant à la température pour des produits alimentaires et/ou médicaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3418396 A
- US 4378451 A
- EP 1638695 A1
- US 2014031462 A1
- EP 2492293 A1
- EP 2877535 A1
- EP 0887379 A1
- WO 9212182 A1
- WO 2004000899 A1
- WO 2004111095 A1
- WO 9924478 A1
- WO 9924479 A1
- WO 0068315 A1
- EP 2520425 A
- WO 2019179959 A
- WO 2016066453 A2


### Non-patent literature cited in the description


- *Chemical Reviews,* 2000, vol. 100 (4), 1316-1327
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- **M. H. WAGNER.** Rheotens-Mastercurves and Drawability of Polymer Melts. *Polymer Engineering and Science,* vol. 36, 925-935